# EUROPÄISCHE PATENTANMELDUNG

(11) **EP 2 787 100 A1**
(43) Veröffentlichungstag der Anmeldung: **08.10.2014**
(21) Anmeldenummer: 13001678.5
(22) Anmeldetag: 02.04.2013
(51) Int. Cl.: C23C 22/34, B05D 7/14, B05D 7/00, C09D 5/10, C25D 9/02, C25D 13/04, C25D 13/20, C25D 15/00, C23C 22/83

(54) **Verfahren zur Herstellung eines beschichteten metallischen Substrats sowie das nach diesem Verfahren erhältliche beschichtete metallische Substrat**

(71) Anmelder: Koch, Matthias, 59969 Bromskirchen (DE)
(72) Erfinder: Koch, Matthias, 59969 Bromskirchen (DE)
(74) Vertreter: Metten, Karl-Heinz

(57) **Zusammenfassung**

Die vorliegende Erfindung betrifft ein Verfahren zur Herstellung eines beschichteten metallischen Substrats, umfassend die Schritte A) Behandeln eines metallischen Substrats mit mindestens einem, insbesondere alkalischen, ersten wässrigen System, enthaltend mindestens ein, insbesondere nichtionisches, Tensid, und mit mindestens einem, insbesondere sauren, zweiten wässrigen System, enthaltend mindestens eine anorganische Säure und/oder ein Salz dieser anorganischen Säure, I) kathodische oder anionische Elektrotauchlackierung des gemäß Schritt A) erhaltenen Substrats mit mindestens einem Elektrotauchlack unter Ausbildung mindestens einer Tauchlackbeschichtung und/oder Pulverbeschichtung und/oder Nasslackbeschichtung des gemäß Schritt A) erhaltenen Substrats, und L) Aushärten, insbesondere thermisches Aushärten, der gemäß Schritt I) erhaltenen Tauchlackbeschichtung, Pulverbeschichtung oder Nasslackbeschichtung.

Ferner umfasst die Erfindung ein Verfahren, das nach Schritt A) und vor Schritt I) den Schritt F) Behandeln des gemäß Schritt A) erhaltenen Substrats mit mindestens einem, insbesondere sauren, wässrigen Phosphatiersystem beinhaltet.

Außerdem hat die Erfindung ein nach dem erfindungsgemäßen Verfahren erhältliches beschichtetes metallisches Substrat und eine mehrteilige Metallstruktur sowie die Verwendung dieses beschichteten metallischen Substrats und der mehrteiligen Metallstruktur als oder für die Herstellung von Armaturen zum Gegenstand.

## Beschreibung

Die vorliegende Erfindung betrifft ein Verfahren zur Herstellung eines beschichteten metallischen Substrats. Ferner betrifft die vorliegende Erfindung die nach dem erfindungsgemäßen Verfahren erhältlichen beschichteten metallischen Substrate. Außerdem betrifft die vorliegende Erfindung mehrteilige Metallstrukturen, enthaltend mindestens ein Metallbauteil, insbesondere Messingbauteil, und mindestens ein insbesondere kathodisch oder anodisch beschichtetes metallisches Substrat sowie deren Verwendung als Armaturen, insbesondere Sanitärarmaturen.

Armaturen, insbesondere Sanitärarmaturen, sind in vielfältigen technischen Ausgestaltungen im Einsatz. Derartige Armaturen sind regelmäßig über einen längeren Zeitraum aggressiven äußeren Bedingungen ausgesetzt und haben daher in besonderer Weise korrosionsbeständig zu sein. Besonders hohe Anforderungen werden in diesem Zusammenhang an Sanitärarmaturen gestellt, die regelmäßig über ein hochglänzendes Erscheinungsbild verfügen. Damit Sanitärarmaturen dauerhaft gegenüber herkömmlichen Nutzungsbedingungen korrosionsbeständig sind, setzt man regelmäßig galvanisch beschichtete Messingbauteile ein. Auf diese Art und Weise lassen sich relativ dicke Beschichtungen erhalten, die über einen hinreichend langen Zeitraum einen angemessenen Korrosionsschutz gewährleisten sollen. Bei der Herstellung und Anbringung solcher Sanitärarmaturen ist besondere Sorgfalt darauf zu legen, dass keine mechanische Beschädigung der galvanischen Beschichtungen eintritt. Denn ansonsten könnte dieses eine korrosionsbedingte Unterwanderung zur Folge haben. Zwecks Risikominimierung sind daher häufig sämtliche Bauteile aus demselben, hochwertigen Material gefertigt.

Besondere Sorgfalt ist geboten, wenn Metallbauteile mit unterschiedlichem Standardelektrodenpotenzial eingesetzt werden sollen. Aufgrund der Stellung in der elektrochemischen Spannungsreihe wird das unedlere Metall oxidiert, d.h. korrodiert. Aus diesem Grunde werden beispielsweise bei Sanitärarmaturen regelmäßig nur gleichartige, hochwertige und demzufolge kostenintensive Bauteile miteinander verarbeitet. Ansonsten kommt es regelmäßig sehr schnell zur sogenannten Kontaktkorrosion. Beispielsweise werden bei Sanitärarmaturen Messingbauteile bzw. galvanisch verchromte Messingbauteile nicht mit Stahlschrauben, Stahlrohren oder Gewindestangen aus Stahl verbaut.

Häufig versucht man, die Korrosionsanfälligkeit von insbesondere Stahlsubstraten durch Aufbringung einer so genannten KTL-Beschichtung zu minimieren. Allerdings liefern die von Fall zu Fall zur Anwendung gelangenden elektrochemischen Beschichtungsverfahren nicht immer reproduzierbar gute Ergebnisse, beispielsweise im Hinblick auf den Erhalt eines hinreichend dichten Lackes. Außerdem wird insbesondere bei Bauteilen mit komplexer Geometrie die sogenannte Kantenflucht beobachtet, was zu der Ausbildung relativ dünner Beschichtungen im Bereich von Kantenverläufen fuhrt. Diese dünnen Beschichtungen stellen regelmäßig keinen hinreichenden Korrosionsschutz mehr dar.

Gemäß der DE 195 04 23 A1versucht man zu besonders robusten KTL-beschichteten Stahlsubstraten zu gelangen, indem man die Metalloberflächen zuvor einem Phosphatierungsschritt unterzieht, bei dem eine wässrige, saure, Phosphationen enthaltende Phosphatierlösung zusätzlich Ozon zu enthalten hat.

In der DE 20 2004 008 504 U1 wird eine korrosionsfeste Versiegelung von Nähten, Stößen oder Falzen lackierter Metallbleche dadurch erhalten, dass man auf den entfetteten, entölten und phosphatierten Blechen aufeinander folgend mindestens die folgenden Schichten anordnet: eine Tauchgrundlackierung, eine Versiegelung aus einem durch Photoenergie und Wärme gehärteten Polymer aus einem (Meth)acrylatmonomer mit einer Phenylgruppe und einem Molekulargewicht von mindestens 200, sowie eine durch Erwärmen gehärtete Decklack- und Klarlackschicht. Ganz offensichtlich bedarf es hier einer Vielzahl an Versiegelungsschritten, um den durch die Tauchgrundlackierung gegebenen Korrosionsschutz auf ein angemessenes Niveau heben zu können.

Eine höhere Korrosionsfestigkeit, einhergehend mit einer gesteigerten dynamischen Belastbarkeit, insbesondere höheren Steinschlagbeständigkeit, soll sich gemäß der DE 10 2009 051 899 B3 durch Anbringung einer Zinklamellenschicht auf einer Elektrotauchlackschicht einstellen.

Gemäß der DE 196 37 372 A1 lassen sich Metalloberflächen für die Zink- oder Manganphosphatierung durch Verwendung eines Titan(IV)phosphats dann besonders gut aktivieren, wenn das Aktivierungsmittel ausgewählt ist aus Lithium- und/oder Silberionen im Gewichtsverhältnis Titan: (Li bzw. Ag) von 1:0.2 bis 1:50. Die derart phosphatierten Metalloberflächen sollen mit einem kathodischen Tauchlack beschichtbar sein.

Es wäre wünschenswert, auf verbesserte Beschichtungsverfahren für Metallsubstrate zurückgreifen zu können, die sich, insbesondere auch bei komplexen Substratgeometrien, durch eine besondere Korrosionsbeständigkeit auszeichnen.

Der vorliegenden Erfindung lag daher die Aufgabe zu Grunde, Verfahren zur korrosionsbeständigen Beschichtung von Metallsubstraten verfügbar zu machen, die nicht mit den Nachteilen des Stands der Technik behaftet sind und die insbesondere mehrkomponentige Bauteile ermöglichen, die aus Metallen mit unterschiedlichem Standardelektrodenpotenzial gebildet sein können. Des Weiteren lag der vorliegenden Erfindung die Aufgabe zu Grunde, mehrkomponentige Bauteile zur Verfügung zu stellen, die sich z.B. als Sanitärarmaturen eignen, insbesondere keine besondere Korrosionsanfälligkeit zeigen und gleichwohl auf ökonomische und ökologische Weise zugänglich sind.

Die der Erfindung zu Grunde liegende Aufgabe wird gemäß einer ersten Ausführungsvariante gelöst durch ein Verfahren zur Herstellung eines beschichteten metallischen Substrats, umfassend die Schritte
A) Behandeln eines metallischen Substrats mit mindestens einem, insbesondere alkalischen, ersten wässrigen System, enthaltend mindestens ein, insbesondere nichtionisches, Tensid, und anschließend mit mindestens einem, insbesondere sauren, zweiten wässrigen System, enthaltend mindestens eine anorganische Säure und/oder ein Salz dieser anorganischen Säure, und/oder mit mindestens einem, insbesondere sauren, zweiten wässrigen System, enthaltend mindestens eine anorganische Säure und/oder ein Salz dieser anorganischen Säure, und anschließend mit mindestens einem, insbesondere alkalischen, ersten wässrigen System, enthaltend mindestens ein, insbesondere nichtionisches, Tensid, und/oder, insbesondere fortwährend, gleichzeitig mit mindestens einem, insbesondere alkalischen, ersten wässrigen System, enthaltend mindestens ein, insbesondere nichtionisches, Tensid, und mit mindestens einem, insbesondere sauren, zweiten wässrigen System, enthaltend mindestens eine anorganische Säure und/oder ein Salz dieser anorganischen Säure, und/oder mit einem dritten wässrigen System, enthaltend mindestens ein, insbesondere nichtionisches, Tensid und mindestens eine anorganische Säure und/oder ein Salz dieser anorganischen Säure,
B) gegebenenfalls Abtropfen und/oder Spülen mit Wasser oder einem wässrigen System des gemäß Schritt A) erhaltenen Substrats,
C) gegebenenfalls Behandeln des gemäß Verfahrensschritt A) oder B) erhaltenen Substrats mit mindestens einem, insbesondere alkalischen, vierten wässrigen System, enthaltend mindestens einen Korrosionsinhibitor, vorzugsweise umfassend mindestens ein Diphosphonat, insbesondere Tetranatrium-1-hydroxyethan-1,1-diphosphonat, und/oder mindestens ein Antioxidans, insbesondere ein Pyrophosphatsalz, und/oder mit mindestens einem, insbesondere alkalischen, fünften wässrigen System, enthaltend mindestens ein, insbesondere nichtionisches, Tensid, und/oder mit mindestens einem, insbesondere alkalischen, sechsten wässrigen System, enthaltend mindestens einen Korrosionsinhibitor, vorzugsweise umfassend mindestens ein Diphosphonat, insbesondere Tetranatrium-1-hydroxyethan-1,1-diphosphonat, und/oder mindestens ein Antioxidans, insbesondere ein Pyrophosphatsalz, und mindestens ein, insbesondere nichtionisches, Tensid,
D) gegebenenfalls Behandeln des gemäß Schritt A), B) bzw. Schritt C) erhaltenen Substrats mit einem, insbesondere alkalischen, siebten wässrigen System, enthaltend mindestens ein Korrosionsschutzpigment,
E) gegebenenfalls Abtropfen und/oder Spülen mit Wasser oder einem wässrigen System des gemäß Schritt C) bzw. D) erhaltenen Substrats,
I) kathodische oder anionische Elektrotauchlackierung des gemäß Schritt A), B), C), D) bzw. E) erhaltenen Substrats mit mindestens einem Elektrotauchlack unter Ausbildung mindestens einer Tauchlackbeschichtung und/oder Pulverbeschichtung und/oder Nasslackbeschichtung des gemäß Schritt A), B), C), D) bzw. E) erhaltenen Substrats,
J) gegebenenfalls Spülen des gemäß Schritt I) erhaltenen Substrats mit dem Elektrotauchlack, insbesondere in Form eines Rezirkulats,
K) gegebenenfalls Abtropfen und/oder Spülen mit Wasser oder einem wässrigen System, insbesondere mit VE-Wasser und/oder mit einer Mischung, insbesondere Lösung, aus oder enthaltend Wasser und mindestens ein organisches Lösungsmittel, des gemäß Schritt I) oder J) erhaltenen Substrats und
L) Aushärten, insbesondere thermisches Aushärten, der gemäß Schritt I), J) bzw. K) erhaltenen Tauchlackbeschichtung, Pulverbeschichtung oder Nasslackbeschichtung.
   Die der Erfindung zu Grunde liegende Aufgabe wird gemäß einer zweiten Ausführungsvariante gelöst durch eine Weiterentwicklung des vorangehend genannten Verfahrens dahingehend, dass dieses ferner nach Schritt A), B), C), D) bzw. E) und vor Schritt I) den Schritt bzw. die Schritte umfasst:
F) Behandeln des gemäß Schritt A), B), C), D) bzw. E) erhaltenen Substrats mit mindestens einem, insbesondere sauren, wässrigen Phosphatiersystem,
G) gegebenenfalls Abtropfen und/oder Spülen mit einem, insbesondere alkalischen, achten wässrigen System des gemäß Schritt F) erhaltenen Substrats,
H) gegebenenfalls Abtropfen und/oder Spülen des behandelten Substrats gemäß Schritt F) oder Schritt G) mit Wasser, insbesondere VE-Wasser, oder einem wässrigen System.

In Verfahrensschritt F) wird regelmäßig mindestens eine Konversionsschicht enthaltend Metallphosphate ausgebildet.

Der Verfahrensschritt A) umfasst implizit auch die Zurverfügungstellung des metallischen Substrats. Das für diesen Verfahrensschritte zur Verfügung gestellte metallische Substrat kann, bevor der Verfahrensschritt A) vorgenommen wird, gängigen Reinigungsprozeduren, z.B. Entfettungs- und/oder Entölungsschritten, unterzogen werden. Die Notwendigkeit solcher vorgelagerter Reinigungsschritte bzw. der Umfang und die Art der Reinigungsschritte hängen jeweils stark vom Grad der Verunreinigung des zur Verfügung gestellten metallischen Substrats ab.

Die Verfahrensvarianten gemäß Schritt A), wonach das zweite wässrige System im Anschluss an das erste wässrige System bzw. das erste wässrige System im Anschluss an das zweite wässrige System appliziert werden können, umfassen ebenfalls die partiell überlappende Anwendung dieser aufeinander folgenden Teilschritte.

Für das erfindungsgemäße Verfahren geeignete metallische Substrat umfassen Eisen, Eisenlegierungen, Zink, Zinklegierungen, Magnesium, Magnesiumlegierungen, Kupfer, Kupferlegierungen, insbesondere Messing und Bronze, Titan, Titanlegierungen, Aluminium, beispielsweise Aluminiumdruckguss, Aluminiumlegierungen, Stahl und Edelstahl oder bestehen im Wesentlichen aus Eisen, Eisenlegierungen, Kupfer, Kupferlegierungen, insbesondere Messing oder Bronze, Titan, Titanlegierungen, Zink, Zinklegierungen, Magnesium, Magnesiumlegierungen, Aluminium, beispielsweise Aluminiumdruckguss, Aluminiumlegierungen, Stahl und/oder Edelstahl.

Für die elektrische Tauchlackierung wird bevorzugt auf das Verfahren der kathodischen Tauchlackierung (KTL) zurückgegriffen. Bei der elektrischen Tauchlackierung werden in Wasser gelöste oder dispergierte, kationische oder anionische Gruppen tragende Bindemittel mit Hilfe von Gleichstrom auf elektrisch leitende Körper aufgebracht. Diese Verfahren sind dem Fachmann bekannt. Beim KTL-Verfahren wird das zu beschichtende Substrat als Kathode geschaltet und in den kathodisch abscheidbaren Elektrotauchlack eingebracht. Legt man Gleichstrom zwischen dem als Kathode geschalteten Substrat und einer in dem Tauchbad befindlichen Anode an, wandern in einer diffusionskontrollierten Grenzschicht die geladenen Dispersionsteilchen an die jeweils entgegengesetzt geladene Elektrode. Dort werden sie ausgefällt. Für die KTL-Beschichtung werden regelmäßig Tauchlacke eingesetzt, enthaltend mindestens ein in Wasser dispergierbares, kationische Gruppen enthaltendes organisches Bindemittel. Prinzipiell sollte jedes in Wasser dispergierbare, kationische Gruppen enthaltende organische Bindemittel geeignet sein. Bevorzugt wird für solche Bindemittel auf aminmodifizierte Epoxidharze zurückgegriffen. Exemplarisch seien aminmodifizierte Polyepoxide, vorzugsweise auf Basis von Polyphenolen und Epichlorhydrin, genannt.

Als aminmodifizierte Epoxidharze können fremdvernetzende Harze wie auch selbstvernetzende Harze eingesetzt werden. Bevorzugt werden fremdvernetzende aminmodifizierte Epoxidharze verwendet. Als Vernetzungsverbindungen kommen beispielsweise Melaminharze, Phenoplaste, Mannichbasen und blockierte Polyisocyanate in Betracht. Bei blockierten Polyisocyanten sind die Isocyanatgruppen z.B. mit einer thermisch labilen Schutzgruppe blockiert. Die elektrischen, insbesondere kathodischen, Elektrotauchlacke können Zusatzstoffe aufweisen. Beispielhaft seien Füllstoffe, Weichmacher, Pigmente und Netzmittel genannt. Geeignete Pigmente umfassen sowohl anorganische Pigmente wie auch organische Pigmente und Farbstoffe. Bei dem erfindungsgemäßen Verfahren kann folglich auch die Farbe der Elektrotauchlackbeschichtung gezielt eingestellt werden.

Während für die erste Ausführungsvariante des erfindungsgemäßen Verfahrens, die ohne einen Phosphatierschritt auskommt, bevorzugt auf Aluminium, beispielsweise Aluminiumdruckguss, oder Aluminiumlegierungen zurückgegriffen wird, kommen für die zweite Ausführungsvariante, enthaltend nun ebenfalls mindestens einen Phosphatierschritt, als metallische Substrate insbesondere solche enthaltend oder bestehend aus Eisen, Eisenlegierungen, Kupfer, Kupferlegierungen, insbesondere Messing oder Bronze, Titan, Titanlegierungen, Zink, Zinklegierungen, Magnesium, Magnesiumlegierungen, Stahl und/oder Edelstahl, z.B. V2A- oder V4A-Edelstahl, in Betracht. Geeigneter Stahl umfasst im Sinne der Erfindung ebenfalls legierten Stahl, ein- oder zweiseitig verzinkten oder legierungsverzinkten Stahl sowie ein- oder zweiseitig aluminierten oder legierungsaluminierten Stahl.

Kommt in Verfahrensschritt I) das Pulverbeschichtungsverfahren zum Einsatz, kann z.B. auf pulverförmige Polyesterharzverbindungen zurückgegriffen werden. Geeignet sind beispielsweise Pulverbeschichtungsverfahren auf Basis von Polyester- oder Polyacrylatmaterialien oder auf Basis von Epoxid/Polyester- oder Urethanharzsystemen. Wird in Verfahrensschritt I) hingegen auf das Nasslackverfahren zurückgegriffen, sind solche Systeme bevorzugt, bei denen die Härtung nicht thermisch, sondern mittels UV-Bestrahlung erfolgt. Geeignete Pulver- und Nasslackbeschichtungsverfahren bzw. -systeme, einschließlich der Art und Weise der Aufbringung dieser Systeme, sind dem Fachmann bekannt.

In einer zweckmäßigen Ausgestaltung des erfindungsgemäßen Verfahrens ist vorgesehen, dass das erste, zweite und/oder dritte wässrige System zusätzlich mindestens einen Korrosionsinhibitor, vorzugsweise umfassend mindestens ein Diphosphonat, insbesondere Tetranatrium-1-hydroxyethan-1,1-diphosphonat, und/oder mindestens ein Antioxidans, insbesondere ein Pyrophosphatsalz, enthält.

Das sechste wässrige System enthält vorzugsweise mindestens ein Salz der Phosphorsäure, insbesondere Trikaliumorthophosphat, und/oder mindestens ein Pyrophosphatsalz, insbesondere Tetrakaliumpyrophosphat.

Als besonders geeignete nichtionische Tenside des ersten und/oder dritten und/oder fünften wässrigen Systems haben sich ethoxylierte und/oder propoxylierte, insbesondere ethoxylierte, Fettalkoholaddukte, insbesondere C6-C20-Fettalkoholaddukte und besonders bevorzugt C9-C16-Fettalkoholaddukte, beispielsweise ethoxylierte und/oder propoxylierte, insbesondere ethoxylierte, C10-Fettalkoholaddukte, erwiesen.

In einer besonders zweckmäßigen Ausgestaltung kommen als Korrosionsschutzpigmente Zinkstaub, Zinkoxid, Trizinkbis(orthophosphat) oder beliebige Mischungen derselben zum Einsatz.

Des Weiteren enthält das wässrige Phosphatiersystem vorteilhafter Weise mindestens ein Zinksalz der Phosphorsäure, insbesondere Zinkbis(dihydrogenphosphat), und gegebenenfalls mindestens ein Nickelsalz der Phosphorsäure, insbesondere Nickel-bis(dihydrogenphosphat).

Darüber hinaus kann das wässrige Phosphatiersystem in einer zweckmäßigen Ausgestaltung zusätzlich auch Phosphorsäure und/oder mindestens ein Reduktionsmittel und/oder mindestens eine Fluoridionenquelle, insbesondere Ammoniumhydrogendifluorid und/oder Kaliumhydrogenfluorid und/oder Natriumfluorid, und/oder Hydroxylammoniumdihydrogenphosphat enthält sowie gegebenenfralls auch noch Natrium-3-nitrobenzolsulfonat und/oder Kresol-EO-phosphat-di-kaliumsalz enthalten.

Das achte wässrige System umfasst oder stellt vorzugsweise eine Natriumcarbonat-Lösung dar. Der pH-Wert des achten wässrigen Systems liegt bevorzugter Weise im Bereich von 10 bis 13, insbesondere im Bereich von 11 bis 12.

Die anorganische Säure des ersten und/oder dritten wässrigen Systems umfasst in einer besonders zweckmäßigen Ausführungsform des erfindungsgemäßen Verfahrens mindestens eine Fluorsäure, insbesondere Hexafluortitansäure, Hexafluorzirkonsäure, Hexafluorhafniumsäure und/oder oder Salze dieser Säuren oder eine beliebige Mischung dieser Säuren und/oder Salze.

Besonders gute Resultate hinsichtlich insbesondere einer besonders guten Korrosionsbeständigkeit stellen sich regelmäßig auch dann ein, wenn die ersten, zweiten, dritten, vierten, fünften, sechsten, siebten und/oder achten wässrigen Systeme, insbesondere die ersten, zweiten, dritten, sechsten, siebten und/oder achten wässrigen Systeme, und/oder das zum Spülen verwendete Wasser bzw. wässrige System eine Temperatur oberhalb von Raumtemperatur, insbesondere im Bereich von 30 bis 90 °C und besonders bevorzugt im Bereich von 35 bis 75 °C, aufweisen.

Die der Erfindung zu Grunde liegende Aufgabe wird des Weiteren gelöst durch nach dem erfindungsgemäßen Verfahren erhältliche beschichtete metallische Substrate.

Die der Erfindung zu Grunde liegende Aufgabe wird außerdem gelöst durch eine mehrteilige Metallstruktur, insbesondere Sanitärarmatur, aus mindestens einem Metallbauteil, auch erstes Metallbauteil genannt, enthaltend ein erstes Metall oder eine erste Metalllegierung, insbesondere aus mindestens einem Messingbauteil, und mindestens einem pulverbeschichteten oder nasslackbeschichteten oder vorzugsweise kathodisch oder anodisch, insbesondere kathodisch, beschichteten metallischen Substrat, insbesondere einem erfindungsgemäßen, vorzugsweise kathodisch, beschichteten metallischen Substrat, wobei das Metallbauteil/das erste Metallbauteil, insbesondere das Messingbauteil, und das beschichtete metallische Substrat mindestens abschnittsweise in Kontakt miteinander stehen und wobei vorzugsweise gemäß der elektrochemischen Spannungsreihe unter Standardbedingungen das Metallbauteil, auch das erste Metallbauteil genannt, vorzugsweise das erste Metall oder die erste Metalllegierung bzw. mindestens ein Metall dieser Metalllegierung, edler ist als das metallische Substrat des beschichteten metallischen Substrats bzw. als mindestens eines der dieses metallische Substrat bildenden Metalle oder Metalllegierungen bzw. als mindestens ein Metall dieser Metalllegierung. Unter Standardbedingungen soll bedeuten, dass die im Stand der Technik allgemein akzeptierten Messbedingungen zur Bestimmung Standardelektrodenpotentiale von Metallen angewendet werden sollen, d.h. dass die Konzentration, genauer die Aktivität der wässrigen Metallionenlösungen in saurer Lösung 1 mol/l beträgt und dass das Potential gegen die Normal-Wasserstoffelektrode als Nullpunkt bei 25°C ermittelt wird.

Das Metallbauteil bzw. das erste Metallbauteil, insbesondere das Messingbauteil, stellt bevorzugt ein zumindest bereichsweise galvanisch verchromtes Metallbauteil, insbesondere Messingbauteil, dar. Hierbei kann in einer Ausführungsvariante vorgesehen sein, dass das, insbesondere kathodisch oder anodisch, beschichtete metallische Substrat, insbesondere wenn nach dem erfindungsgemäßen Verfahren beschichtet, ein kathodisch oder anodisch beschichtetes Stahlsubstrat oder Edelstahlsubstrat, vorzugsweise ein kathodisch beschichtetes Stahlsubstrat oder Edelstahlsubstrat, darstellt.

Exemplarisch seien als erfindungsgemäße, insbesondere kathodisch oder anodisch, beschichtete, metallische Substrate Gewindestangen, Schrauben, Ventile, insbesondere Kugelventile, Muttern, Konterscheiben, Gestänge, Mitnehmerstifte, Gelenke und/oder Rohre genannt.

Die nach den erfindungsgemäßen Verfahren erhältlichen metallischen Substrate können für die Herstellung von Armaturen, insbesondere Sanitärarmaturen, eingesetzt werden.

Die erfindungsgemäßen Substrate bzw. die nach dem erfindungsgemäßen Verfahren erhältlichen beschichteten metallischen Substrate zeichnen sich durch eine ausgeprägte Korrosionsbeständigkeit auch bei komplexer Bauteilgeometrie aus. Insbesondere auch bei Verwendung des Verfahrens der elektrischen Tauchlackierung, vorzugsweise der KTL-Beschichtung, werden, insbesondere auch bei Bauteilen mit komplexer Geometrie, sehr homogene und sehr dichte Beschichtungen selbst mit sehr dünner Beschichtungsdicke erhalten. Beispielsweise lassen sich mit der elektrischen Tauchlackierung Beschichtungsdicken im Bereich von zum Beispiel 5 bis 40 bzw. 10 bis 30 µm einstellen. Die mit den erfindungsgemäßen Verfahren erhältlichen beschichteten metallischen Substrate zeigen regelmäßig eine sehr geschlossene, undurchlässige Beschichtung. Diese Beschichtungen verfügen über eine ausgeprägt gute Haftung und zeigen auch unter aggressiven Bedingungen keine Ablösungstendenzen. D.h. auch an schwer zugänglichen Stellen findet ein gleichmäßiger homogener Beschichtungsauftrag statt. Von besonderem Vorteil ist auch, dass die metallischen Substrate auch schon nach den ersten Verfahrensschritten, z.B. Verfahrensschritt A), keine bzw. keine ausgeprägte Korrosionsneigung zeigen und somit sehr unkompliziert und ohne großen Aufwand handhabbar sind.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Herstellung eines beschichteten metallischen Substrats, umfassend die Schritte
A) Behandeln eines metallischen Substrats
mit mindestens einem, insbesondere alkalischen, ersten wässrigen System, enthaltend mindestens ein, insbesondere nichtionisches, Tensid, und anschließend mit mindestens einem, insbesondere sauren, zweiten wässrigen System, enthaltend mindestens eine anorganische Säure und/oder ein Salz dieser anorganischen Säure, und/oder
mit mindestens einem, insbesondere sauren, zweiten wässrigen System, enthaltend mindestens eine anorganische Säure und/oder ein Salz dieser anorganischen Säure, und anschließend mit mindestens einem, insbesondere alkalischen, ersten wässrigen System, enthaltend mindestens ein, insbesondere nichtionisches, Tensid, und/oder
mit mindestens einem, insbesondere alkalischen, ersten wässrigen System, enthaltend mindestens ein, insbesondere nichtionisches, Tensid, und mit mindestens einem, insbesondere sauren, zweiten wässrigen System, enthaltend mindestens eine anorganische Säure und/oder ein Salz dieser anorganischen Säure, und/oder
mit einem dritten wässrigen System, enthaltend mindestens ein, insbesondere nichtionisches, Tensid und mindestens eine anorganische Säure und/oder ein Salz dieser anorganischen Säure,
B) gegebenenfalls Abtropfen und/oder Spülen mit Wasser oder einem wässrigen System des gemäß Schritt A) erhaltenen Substrats,
C) gegebenenfalls Behandeln des gemäß Verfahrensschritt A) oder B) erhaltenen Substrats mit mindestens einem, insbesondere alkalischen, vierten wässrigen System, enthaltend mindestens einen Korrosionsinhibitor und/oder mindestens ein Antioxidans, und/oder
mit mindestens einem, insbesondere alkalischen, fünften wässrigen System, enthaltend mindestens ein, insbesondere nichtionisches, Tensid, und/oder mit mindestens einem, insbesondere alkalischen, sechsten wässrigen System, enthaltend mindestens einen Korrosionsinhibitor und/oder mindestens ein Antioxidans, und mindestens ein, insbesondere nichtionisches, Tensid,
D) gegebenenfalls Behandeln des gemäß Schritt A), B) bzw. Schritt C) erhaltenen Substrats mit einem, insbesondere alkalischen, siebten wässrigen System, enthaltend mindestens ein Korrosionsschutzpigment,
E) gegebenenfalls Abtropfen und/oder Spülen mit Wasser oder einem wässrigen System des gemäß Schritt C) oder D) erhaltenen Substrats,
I) kathodische oder anionische Elektrotauchlackierung des gemäß Schritt A), B), C), D) bzw. E) erhaltenen Substrats mit mindestens einem Elektrotauchlack unter Ausbildung mindestens einer Tauchlackbeschichtung und/oder Pulverbeschichtung und/oder Nasslackbeschichtung des gemäß Schritt A), B), C), D) bzw. E) erhaltenen Substrats,
J) gegebenenfalls Spülen des gemäß Schritt I) erhaltenen Substrats mit dem Elektrotauchlack, insbesondere in Form eines Rezirkulats,
K) gegebenenfalls Abtropfen und/oder Spülen mit Wasser oder einem wässrigen System, insbesondere mit VE-Wasser und/oder mit einer Mischung, insbesondere Lösung, aus oder enthaltend Wasser und mindestens ein organisches Lösungsmittel, des gemäß Schritt I) oder J) erhaltenen Substrats und
L) Aushärten, insbesondere thermisches Aushärten, der gemäß Schritt I), J) bzw. K) erhaltenen Tauchlackbeschichtung, Pulverbeschichtung oder Nasslackbeschichtung.

2. Verfahren nach Anspruch 1, ferner umfassend nach Schritt A), B), C), D) bzw. E) und vor Schritt I) den Schritt bzw. die Schritte:
F) Behandeln des gemäß Schritt A), B), C), D) bzw. E) erhaltenen Substrats mit mindestens einem, insbesondere sauren, wässrigen Phosphatiersystem,
G) gegebenenfalls Abtropfen und/oder Spülen mit einem, insbesondere alkalischen, achten wässrigen System des gemäß Schritt F) erhaltenen Substrats,
H) gegebenenfalls Abtropfen und/oder Spülen des behandelten Substrats gemäß Schritt F) oder Schritt G) mit Wasser, insbesondere VE-Wasser, oder einem wässrigen System.

3. Verfahren nach Anspruch 1 oder 2, **dadurch gekennzeichnet, dass** das metallische Substrat Eisen, Eisenlegierungen, Kupfer, Kupferlegierungen, Titan, Titanlegierungen, Zink, Zinklegierungen, Magnesium, Magnesiumlegierungen, Stahl, Edelstahl, Messing, Bronze, Aluminium, Aluminiumlegierungen und/oder Aluminiumdruckguss enthält oder im Wesentlichen aus Eisen, Eisenlegierungen, Kupfer, Kupferlegierungen, Titan, Titanlegierungen, Zink, Zinklegierungen, Magnesium, Magnesiumlegierungen, Stahl, Edelstahl, Messing, Bronze, Aluminium, Aluminiumlegierungen und/oder Aluminiumdruckguss besteht.

4. Verfahren nach einem der vorangehenden Ansprüche, **dadurch gekennzeichnet, dass** das erste, zweite und/oder dritte wässrige System zusätzlich mindestens einen Korrosionsinhibitor und/oder mindestens ein Antioxidans enthält und/oder dass das sechste wässrige System mindestens ein Salz der Phosphorsäure und/oder mindestens ein Pyrophosphatsalz enthält.

5. Verfahren nach einem der vorangehenden Ansprüche, **dadurch gekennzeichnet, dass** das nichtionische Tensid des ersten und/oder dritten und/oder fünften wässrigen Systems ethoxylierte und/oder propoxylierte, insbesondere ethoxylierte, Fettalkoholaddukte, insbesondere C6-C20-Fettalkoholaddukte und besonders bevorzugt C9-C16-Fettalkoholaddukte, umfasst oder darstellt.

6. Verfahren nach einem der vorangehenden Ansprüche, **dadurch gekennzeichnet, dass** das Korrosionsschutzpigment Zinkstaub, Zinkoxid, Trizinkbis(orthophosphat) oder eine beliebige Mischungen derselben enthält und/oder dass das wässrige Phosphatiersystem mindestens ein Zinksalz der Phosphorsäure und gegebenenfalls mindestens ein Nickelsalz der Phosphorsäure enthält.

7. Verfahren nach einem der vorangehenden Ansprüche, **dadurch gekennzeichnet, dass** das wässrige Phosphatiersystem ferner Phosphorsäure und/oder mindestens ein Reduktionsmittel und/oder mindestens eine Fluoridionenquelle enthält.

8. Verfahren nach einem der Ansprüche 2 bis 7, **dadurch gekennzeichnet, dass** das achte wässrige System einen pH-Wert im Bereich von 10 bis 13, insbesondere im Bereich von 11 bis 12, aufweist.

9. Verfahren nach einem der vorangehenden Ansprüche, **dadurch gekennzeichnet, dass** die anorganische Säure eine Fluorsäure, insbesondere Hexafluortitansäure, Hexafluorzirkonsäure, Hexafluorhafniumsäure oder eine beliebige Mischung dieser Säuren und/oder ein Salz einer Fluorsäure, insbesondere ein Salz der Hexafluortitansäure, Hexafluorzirkonsäure, Hexafluorhafniumsäure oder einer beliebigen Mischung dieser Salze umfasst.

10. Verfahren nach einem der vorangehenden Ansprüche, **dadurch gekennzeichnet, dass** die ersten, zweiten, dritten, sechsten, siebten und/oder achten wässrigen Systeme und/oder das zum Spülen verwendete Wasser bzw. wässrige System eine Temperatur oberhalb von Raumtemperatur, insbesondere im Bereich von 30 bis 90 °C und besonders bevorzugt im Bereich von 35 bis 75 °C, aufweist.

11. Beschichtete metallische Substrate, erhältlich nach einem Verfahren gemäß einem der vorangehenden Ansprüche.

12. Beschichtete metallische Substrate nach Anspruch 11, **dadurch gekennzeichnet, dass** das metallische Substrat Eisen, Eisenlegierungen, Kupfer, Kupferlegierungen, Titan, Titanlegierungen, Zink, Zinklegierungen, Magnesium, Magnesiumlegierungen, Stahl, Edelstahl, Messing, Bronze, Aluminium, Aluminiumlegierungen und/oder Aluminiumdruckguss enthält oder im Wesentlichen aus Eisen, Eisenlegierungen, Kupfer, Kupferlegierungen, Titan, Titanlegierungen, Zink, Zinklegierungen, Magnesium, Magnesiumlegierungen, Stahl, Edelstahl, Messing, Bronze, Aluminium, Aluminiumlegierungen und/oder Aluminiumdruckguss besteht und dass diese mindestens eine Elektrotauchlackbeschichtung oder Pulverbeschichtung oder Nasslackbeschichtung aufweisen.

13. Mehrteilige Metallstruktur, insbesondere Sanitärarmatur, aus mindestens einem Metallbauteil, enthaltend ein erstes Metall oder eine erste Metalllegierung, insbesondere aus mindestens einem Messingbauteil, und mindestens einem pulverbeschichteten oder nasslackbeschichteten oder vorzugsweise kathodisch oder anodisch beschichteten metallischen Substrat, insbesondere gemäß Anspruch 11 oder 12, wobei das Metallbauteil, insbesondere das Messingbauteil, und das beschichtete metallische Substrat mindestens abschnittsweise in Kontakt miteinander stehen und wobei vorzugsweise gemäß der elektrochemischen Spannungsreihe unter Standardbedingungen das Metallbauteil, auch das erste Metallbauteil genannt, vorzugsweise das erste Metall oder die erste Metalllegierung bzw. mindestens ein Metall dieser Metalllegierung, edler ist als das metallische Substrat des beschichteten metallischen Substrats bzw. als mindestens eines der dieses metallische Substrat bildenden Metalle oder Metalllegierungen bzw. als mindestens ein Metall dieser Metalllegierung.

14. Mehrteilige Metallstruktur nach Anspruch 13, **dadurch gekennzeichnet, dass** das Metallbauteil, insbesondere das Messingbauteil, ein zumindest bereichsweise galvanisch verchromtes Metallbauteil, insbesondere Messingbauteil, darstellt.

15. Mehrteilige Metallstruktur nach Anspruch 13 oder 14, **dadurch gekennzeichnet, dass** das, insbesondere kathodisch oder anodisch, beschichtete metallische Substrat ein, insbesondere kathodisch oder anodisch, beschichtetes Stahlsubstrat oder Edelstahlsubstrat darstellt und/oder dass das, insbesondere kathodisch oder anodisch, beschichtete metallische Substrat eine Gewindestange, eine Schraube, ein Ventil, insbesondere Kugelventil, eine Mutter, eine Konterscheibe, ein Gestänge, einen, Draht, einen Mitnehmerstift, ein Gelenk und/oder ein Rohr umfasst oder darstellt.

16. Verwendung der beschichteten metallischen Substrate nach Anspruch 11 oder 12 oder der mehrteiligen Metallstrukturen nach einem der Ansprüche 13 bis 15 als oder für die Herstellung von Armaturen, insbesondere Sanitärarmaturen.
